(19) Europäisches Patentamt
European Patent Office
Office européen des brevets

(11) **EP 4 468 029 A2**

(12) **EUROPEAN PATENT APPLICATION**

(43) Date of publication:
**27.11.2024 Bulletin 2024/48**

(51) International Patent Classification (IPC):
***G01S 7/481*** (2006.01)

(21) Application number: **24205582.0**

(52) Cooperative Patent Classification (CPC):
**G01S 7/4813; G01S 7/4876; G01S 7/497;**
G01S 2007/4975

(22) Date of filing: **26.10.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.09.2017 US 201762562307 P**

(62) Document number(s) of the earlier application(s) in
accordance with Art. 76 EPC:
**17198595.5 / 3 460 509**

(71) Applicant: **ams AG**
**8141 Premstätten (AT)**

(72) Inventors:
• **Glover, Kerry**
**Crossroads, Texas, 76227-2413 (US)**

• **Manfred, Lueger**
**8504 Stainz (AT)**
• **Kappel, Robert**
**8521 Wettmannstätten (AT)**
• **Mautner, Christian**
**8072 Fernitz (AT)**
• **Manninger, Mario**
**8141 Premstätten (AT)**

(74) Representative: **Epping - Hermann - Fischer**
**Patentanwaltsgesellschaft mbH**
**Schloßschmidstraße 5**
**80639 München (DE)**

Remarks:
This application was filed on 09-10-2024 as a
divisional application to the application mentioned
under INID code 62.

(54) **METHOD FOR CALIBRATING A TIME-OF-FLIGHT SYSTEM AND TIMEOF-FLIGHT SYSTEM**

(57) A method is presented for calibrating a time-of-flight system having a time-of-flight sensor located behind a cover plate (CP). The method involves emitting a plurality of sending pulses (EP) of light in response to respective trigger pulses of a control signal (CS1) and detecting received pulses of light (RP, RP'). Respective difference values are determined which are representative of a time period between one of the sending pulses (EP) and one of the received pulses (RP, RP'). The difference values are accumulated into a number of bins (1, ..., N) of at least one histogram. The method further involves recording at least one crosstalk response (CTP) in the histogram within a predetermined range of bins (1, ..., M), and calibrating the histogram using the recorded crosstalk response (CTP). Finally, an output signal (OS) is generated which is indicative of a time-of-flight based on an evaluation of the calibrated histogram.

FIG 1

EP 4 468 029 A2

**Description**

The invention relates to the field of calibrating a time-of-flight system.

Document EP 2 469 296 A1 describes an optoelectronic sensor and a method for recording and determining the distance of an object.

Document WO 2017/115247 A1 describes a method and a system for at least partially removing intrinsic static noise from data obtained by an optical time-of-flight sensor.

Document AT 513 402 B1 describes a method for distance measurement.

Time-of-flight sensors have many applications related to distance measurement, including proximity detection, assisting the autofocusing of digital cameras, multi-zone autofocus, gesture detection or 3D camera applications, for example. A time-of-flight, ToF, can be determined by emitting pulses of electromagnetic radiation and detecting the reflections from an object. This technique can utilize multiple pulses over multiple periods to collect more data to improve the signal to noise ratio. Reflections are detected with a time delay which is an indication of a distance between the sensor and the object. The time delay, or time-of-flight $t_D$ hereinafter, can be calculated as

$$t_D = 2\frac{D}{c},$$

where D denotes a distance between the sensor and the object and c denotes the speed of light in air.

One of the challenging aspects of this technique is related to optical crosstalk. Implementations of time-of-flight sensors located behind a cover often suffer from contamination on the cover such as smudge on the glass of a mobile device or camera. In turn, this often results in distortion and reduced accuracy.

In a typical implementation, a laser diode or a surface emitter, such as a vertical-cavity surface-emitting laser, VCSEL, is used as emitter for emitting pulses of electromagnetic radiation. A pulse width is wide and the reflecting pulses cover a significant distance. As discussed above the distance to an object is determined from the delay of the return pulse. However, the both emitted and reflected pulse traverse through the cover and may be affected by any contamination on a cover surface. For example, when a smudge exist on the cover, this may provide more light return at an earlier time. Some ToF methods average over the distance and provide a mean distance measurement. Then contamination may appear as an object very close to the sensor and result in the measurement being biased to a shorter distance. Thus, the measurement indicate a shorter distance than the actual distance.

In such a system, complex calibration may be needed to eliminate the crosstalk due to the cover. In addition, additional system crosstalk should be very low such that compensation is possible. This calibration is an additional step in the overall system manufacturing process which adds complexity. After an initial calibration, however, it is difficult or even impossible to know when additional crosstalk has been introduced. As such, there is no way to dynamically calibrate the system to adjust for this additional crosstalk. Methods have been introduced to determine if excess crosstalk exists but lack in concepts to remove the impact of additional crosstalk during operation.

It is therefore an object to provide an improved concept for a time-of-flight system and a method for calibrating a time-of-flight system which is less complex and allows for improved accuracy.

This object is achieved by the subject matter of the independent claims. Further implementations and embodiments are the subject matter of the dependent claims.

It is to be understood that any feature described hereinafter in relation to any one embodiment may be used alone, or in combination with other features described hereinafter, and may also be used in combination with one or more features of any other of the embodiments, or any combination of any other of the embodiments, unless explicitly described as an alternative. Furthermore, equivalents and modifications not described below may also be employed without departing from the scope of the time-of-flight system and the method for calibrating a time-of-flight system as defined in the accompanying claims.

The improved concept relates to a time-of-flight, ToF, system located behind a cover plate, e.g. embedded in a mobile device or a digital camera. The ToF system is based on a time-of-flight sensor. Such a ToF sensor is arranged to measure a time it takes for a sending pulse to be reflected from an external target and to reach again the ToF sensor. The sensor may utilize multiple sending pulses over multiple time periods to collect more data in order to improve a signal to noise ratio. The data comprises difference values representing a time period between emission of a sending pulse and detection of a reflected pulse. These values are collected into one or more histograms and are then processed to determine time-of-flight value and derive a distance.

One aspect of the improved concept is to use a narrow pulse width of the sending pulses which allows for the detection of multiple objects of interest in a histogram, including the cover plate over the ToF sensor. The narrow pulse means that a reflection from the cover plate may end before a reflection from external objects of interest can be detected. For example, with a 500 ps sending pulse, the pulse width covers a distance of about 75 mm. If the nearest object of interest is located beyond 200 mm, which is typical for many camera systems, then a reflection from the cover plate may not interfere with the reflection from the object.

In other cases, such as proximity detection, crosstalk from the cover plate can be calibrated, e.g. by subtracting a calibration value or a crosstalk response from an output signal of the ToF sensor. However, this may influence the ability to determine close proximity events, e.g. when an object is at a close or zero distance. Furthermore, the improved concept provides means to dynamically adjust the output signal of the ToF sensor. One example where dynamic adjustments have benefits involves situations where the cover plate is exposed to the environment. For example, in a cell phone or camera, the cover plate could come in contact with a user's hand or face and thereby accumulate dirt, fingerprint, makeup, etc. on the plate above the sensor. This could appear to the sensor as a translucent coating which may increase crosstalk. In previous systems, translucent coating decreases the accuracy of the distance measurement. The improved concept, however, provides means for eliminating the impact of translucent coating, decrease crosstalk while maintaining high accuracy.

In at least one embodiment the time-of-flight system has a time-of-flight sensor which is located behind a cover plate. The cover plate may be of the glass or any other transparent material, such as plastics.

A method for calibrating the time-of-flight system involves emitting a plurality of sending pulses of light in response to respective trigger pulses of a control signal. In turn, received pulses of light are detected, e.g. by means of reflection at an external object or by reflection at the cover plate. Respective difference values are determined which are representative of a time period between one of the sending pulses and one of the received pulses. The difference values are accumulated into a number of bins of at least one histogram.

In the histogram at least one crosstalk response is recorded. The crosstalk response resides within a predetermined range of bins. Then, the histogram is calibrated using the recordedcrosstalk response. Finally, an output signal of the time-of-flight sensor is generated and is indicative of a time-of-flight based on an evaluation of the calibrated histogram.

By recordedthe crosstalk response in the histogram, e.g. by identifying a crosstalk peak, the system can reduce or even eliminate the impact of crosstalk from the cover plate and, further, from translucent coating, such as smudges on the cover plate, and enable the ToF system to measure a distance to an external object with an accuracy that is less affected by contamination, i.e. even when translucent coating is present. The system is robust even in environments where contaminations are present. The system can rely on the results from the TOF sensor as being an accurate measurement of the distance. In addition, it is a much simpler to calibrate the ToF system, e.g. during an initial manufacturing process.

The crosstalk is assumed to originate from the cover plate above the time-of-flight sensor which is may be at zero distance (or some very small distance). Thus, a sending pulse may be immediately be reflected back to the time-of-flight sensor. If a histogram bin size is the same as a pulse width of the sending pulses, and the pulse is a square pulse, then the received pulses due to reflection at the cover plate may predominantly fall into the predetermined range of bins, e.g. the first or couple of first bins of the histogram. In most applications, the crosstalk response may fall into the first few bins. The narrower the pulse width and wider the histogram, the more likely a received pulse due to reflection at the cover plate will not impact later bins of the histogram.

In at least one embodiment the histogram is calibrated by disregarding the crosstalk response. The output signal is indicative of a time-of-flight of a peak or peaks in the histogram at the bin or range of bins other than the predetermined range of bins. For example, the time-of-flight system can be used in an auto focus system of a digital camera. Camera lenses have a shortest focus length which is known by the optical design of the lens. A given focus length determines a bin position in the histogram. If the crosstalk response is recorded at a smaller bin position than it may be disregarded during the evaluation as it may have no impact for determining a time-of-flight to assist the autofocus.

In at least one embodiment the histogram is calibrated by evaluating the histogram only for higher bins or bin numbers other than the predetermined range of bins. For example, the crosstalk bin originating from reflections at the cover plate may determine a closest distance that the time-of-flight system is able to resolve. Thus, any object of interest typically is at a larger distance and its difference values may only be accumulated into higher bins when compared to the determined crosstalk response.

In at least one embodiment the histogram is calibrated by a subtracting the crosstalk response from the histogram. The crosstalk response can be multiplied by a scaling factor. Said scaling factor could be any number, e.g. including 1. For example, in applications such as proximity detection, a distance of interest may include zero distance to the cover plate. Then the amount of crosstalk, e.g. represented by the crosstalk response in the predetermined range of bins should be recorded such that it could be subsequently subtracted from the histogram to reveal only the output signal of interest. Respective crosstalk responses in single histograms can be averaged and recorded as a common crosstalk response.

In at least one embodiment the emitting of a plurality of sending pulses, detecting received pulses and determining respective difference values is repeated such that the series of histograms are accumulated with difference values. For example, the emission of the plurality of sending pulses can be repeated from several pulses up to thousand or even millions of sending pulses. The subsequent steps of detecting received pulses and determining difference values can be repeated in a similar or same way. Furthermore, accumulation of a given histogram may also involve repeating the above cited steps from several pulses up to thousands of even millions of sending pulses. The actual number of repetitions for each histogram or a series of histograms is determined by the application, e.g. by a desired signal to noise ratio.

In at least one embodiment in the series of histograms, i.e. in each or some of the histograms one or more further peaks are determined. The determined further peaks are monitored in the series of histograms. Finally, one or more of the histograms of the series of histograms is calibrated if one or more of the monitored peaks moves into the predetermined range of bins.

One way to monitor the further peaks is to determine and record their respective difference values in a memory. This way, a further peak may be discriminated from the crosstalk response. For example, a further peak may indicate the distance of an external object in a proximity sensor application. In such an application it may be desired to also be able to detect a zero distance, i.e. an external object is in contact with the cover plate. In this case the crosstalk response and the further peak indicating zero distance may be indistinguishable or overlapping when the object approaches the cover plate. Then, the monitoring provides a way to determine this condition.

In at least one embodiment the series of histograms is accumulated such that the histogram accumulation is repeated and intermediate results are stored at a rate fast enough to record a movement of an external object.

In at least one embodiment a calibration value is determined in a pre-calibration mode at startup of the time-of-flight system. The pre-calibration mode involves a defined calibration condition. One such condition could be defined with no objetcs present other than the cover plate (CP). This way any reponse in the histograms is only due to reflections at tha cover plate, for example. Another condition may involve an external object placed at a defined distance to the sensor which allows to discriminate crosstalk and object contribution. In addition or alternatively, the startup can be an initial startup at manufacturing or a startup of a device into which the time-of-flight system is embedded. The calibration value is dynamically adjusted by monitoring the crosstalk response and/or the further peaks.

One way to implement the pre-calibration mode, e.g. for proximity application, would be to have an initial baseline calibration where the crosstalk histogram is collected and averaged. This baseline could be adjusted with a multiplying factor to account for shot noise and could then be subtracted from any future histogram recorded during a normal mode of operation in order to reduce or eliminate the crosstalk due to reflections at the cover plate. Proximity or close distances to the ToF sensor are typically apparent in the histogram as peaks. Such peaks should be much higher that the crosstalk response and crosstalk impact can at least be reduced or even eliminated from the histogram.

In at least one embodiment the calibration value is determined from the monitored peak that has moved into the predetermined range of bins. In this case the monitored peak defines the calibration peak. In addition or alternatively, the calibration value is determined from a comparison of the crosstalk response and the monitored peak that has moved into the predetermined range of bins. In addition or alternatively, the calibration value is determined from a combined crosstalk response comprising both the crosstalk response and the monitored peak that has moved into the predetermined range of bins.

For example, contamination such as smudges or dirt deposited on the cover plate can be accounted for by monitoring the further peaks related to approaching and moving away objects. If the crosstalk response has increased or decreased when the object moves away from the target, a filter could be applied to dynamically change the calibration value to account for the addition or subtraction of additional crosstalk caused by contamination, e.g. a smudge or dirt.

In at least one embodiment the calibration value is determined from the combined crosstalk response using a time averaging filter. The filter has a slow attack, that is a slow time averaging as a signal amplitude of the combined crosstalk response increases. Ot the filter has a fast decay, that is a fast averaging as the signal amplitude of the combined crosstalk response decreases.

In at least one embodiment the control signal is generated with a sequence of trigger pulses. A time period between subsequent trigger pulses is determined by a desired maximum detection range of the time-of-flight sensor. For example, the time period corresponds to a sample rate. The time-of-flight system may only distinguish reflected pulses within the period determined by the trigger pulses. Reflections from larger distances may lead to additional crosstalk or aliasing in the histogram or output signal.

In at least one embodiment a pulse width of the sending pulses is equal or smaller than the difference value representative of a minimum detection range of the time-of-flight sensor. For example, the pulse width of the sending pulses can be one third or smaller than the time period between subsequent trigger pulses such as 1/10 or 1/120 of said time period. The pulse width can be equal or smaller than 10 ns, 1 ns, 500 ps, 250 ps, or 100 ps.

A "narrow pulse" is a pulse can be considered a pulse with a pulse width much smaller than the time period or a sample period discussed above. This allows for the crosstalk to fall in the predetermined range of bins, e.g. the first few bins of the histogram. This could be anywhere from a quarter of the sample period to much smaller bin sizes, for example. In the quarter example, if the crosstalk all fell in the first bin, the evaluation of the histogram for the second, third and fourth bin would not be impacted by additional smudges on the glass. Likewise for smaller pulse widths. If the distance of interest is outside of the predetermined range of bins, e.g. the first few bins of the histogram, then those bins could be ignored in determining a time-of-flight and only the higher bins be used to determine a distance.

In at least one embodiment a range of the histogram is determined by the desired maximum detection range. A bin size of the histogram is arranged to be equal or smaller than the pulse width of the sending pulses. For example, for a pulse width of 500 ps the bin size may be 1 ns, 5 ns or 1 ns wide.

The histogram consists of a number of bins. The size of each bins should be equal or less than the pulse width in order to provide sufficient resolution, e.g. to distinguish the crosstalk response from other contributions such as peaks related to actual objects to be detected. In a prior art pulsed indirect time of flight system, the VCSEL pulse occupies half of a sample period and the received light is collected into two time periods. This is the same as a direct time of flight system where there are only two bins in a histogram. One benefit of a histogram based system is that the pulse width of a sending pulse can be less than half of the sample period as long as information is collected for multiple periods of the pulse width. A time-to-digital converter, TDC, can be used to determine the difference values should at least be as fast as the pulse width.

In at least one embodiment the pulse width of the sending pulses, the time period between subsequent trigger pulses and/or a number of sending pulses is adjustable or programmable.

In at least one embodiment a time-of-flight system comprises a time-of-flight sensor which is located behind the cover plate. The time-of-flight sensor comprises an optical emitter which is configured to emit a plurality of sending pulses of light in response to respective trigger pulses of a control signal. The detector is configured to detect received pulses of light. A measurement block is configured to determine respective difference values representative of a time period between one of the sending pulses and one of the received pulses.

A histogram block is configured to accumulate the difference values into a number of bins of a histogram. Furthermore, the processing circuit is configured to record at least one crosstalk response in the histogram within a predetermined range of bins. Furthermore, the processing circuit is configured to calibrate the histogram using the recorded crosstalk response and to generate an output signal which is indicative of a time-of-flight based on an evaluation of the calibrated histogram. Finally, a control unit is configured to generate the control signal with a sequence of trigger pulses.

In at least one embodiment the time-of-flight system is embedded in a mobile device and/or an autofocus system of a digital camera. The time-of-flight sensor is a proximity sensor and/or the rangefinder.

In at least one embodiment the time-of-flight sensor comprises a driver which is arranged to drive the emitter depending on the sequence of trigger pulses. The driver is arranged to drive the emitter such that a pulse width of the sending pulses is narrow in time. A narrow pulse width of the sending pulses is equal smaller than the difference value representative of a time period between one of the sending pulses and one of the received pulses reflected at the cover plate. For example, the pulse width of the sending pulses can be one third or smaller than the time period between subsequent trigger pulses such as 1/10 or 1/120 of said time period. The pulse width can be equal or smaller than 10 ns, 1 ns, 500 ps, 250 ps, or 100 ps.

Further implementations of the time-of-flight system are readily derived from the various implementations and embodiments of the method and vice versa.

Further aspects of the improved concept relate to the following aspects.

In at least one embodiment the emitter comprises a laser diode or a surface emitting laser diodes such as a VCSEL.

In at least one embodiment the driver comprises the driver circuit for a laser diode or surface emitting laser diodes such as a VCSEL. The driver is arranged to drive the laser diode or surface emitting laser diode to emit sending pulses in the picosecond range.

In at least one embodiment the detector comprises a photonic sensor such as a single-photon avalanche diode, SPAD, or an array of SPADs.

In at least one embodiment the measurement block comprises the time to digital converter, TDC, for example, further comprising one or more ring oscillators. The time to digital converter or several time to digital converters are configured to determine the difference values in one or more histograms.

In at least one embodiment the processing circuit comprises a microprocessor or CPU. The processing circuit may be part of a larger device such as a mobile device or digital camera into which the time-of-flight system is embedded.

In at least one embodiment the pulse width of the sending pulses is narrower than a minimum distance determined by a number of the lowest bins in the histogram.

In at least one embodiment a number of first lowest bins is recorded in a memory.

In at least one embodiment the recorded first bins, i.e. its corresponding difference values, also distracted from the histogram to determine whether a corresponding distance to an object lies within said first bins, e.g. for determining a zero distance.

In at least one embodiment an altered crosstalk is reported to indicate contamination on the cover plate.

By using a short VCSEL pulse coupled with a histogram, the system can reduce the impact of contamination such as smudges on the cover and enable the ToF sensor to measure an accurate distance even when translucent coating is present. There are several methods for accomplishing this including ignoring the initial bins of the histogram and recording the initial peak indicating a crosstalk response of the histogram then subtracting the respective difference values from the ongoing values. Furthermore, calibration may involve dynamically compensating for the addition or subtraction of translucent coating from the cover plate. In cases where further peaks are reported such as two objects the method can determine whether one peak is due to crosstalk and another is due to an external object, e.g. a moving external object.

In the following, the improved concept is explained in detail with the aid of exemplary implementations by reference to the drawings. Components that are functionally identical or have an identical effect may be denoted by identical references. Identical components and/or components with identical effects may be described only with respect to the figure where they occur first and the description is not necessarily repeated in subsequent figures.

In the drawings:

Figure 1     shows an example implementation of a time-of-flight sensor behind a cover according to the improved concept;

Figure 2     shows an example implementation of a time-of-flight sensor according to the improved concept;

Figure 3     shows another example implementation of a time-of-flight sensor according to the improved concept;

Figure 4A     shows a schematic example of a measurement process of a single object;

Figure 4B     shows a schematic histogram of a measurement process of a single object;

Figure 5A     shows a schematic example of a measurement process of an object and a cover;

Figure 5B     shows a schematic histogram of a measurement process of an object and a cover.

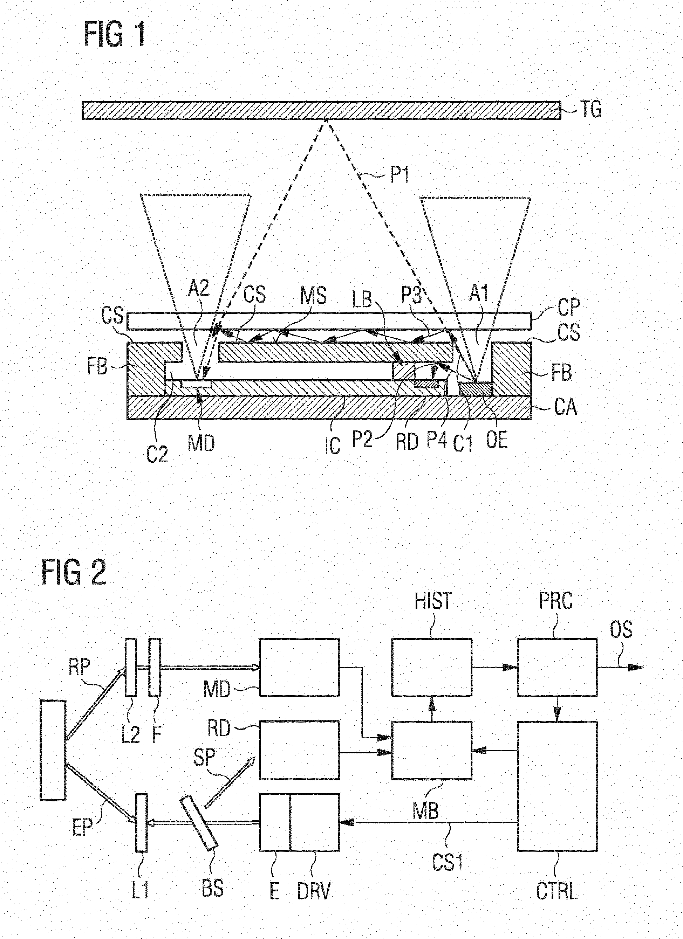

Figure 1 shows an example implementation of a time-of-flight sensor behind a cover according to the improved concept. In particular, the drawing shows a side view of the time-of-flight sensor implemented as an optical sensor module, e.g. as part of a time-of-flight system. The module comprises a carrier CA and an opaque housing arranged on the carrier. The housing comprises a light barrier LB which divides the housing into a first and a second chamber C1, C2. The first and second chambers C1, C2 are further confined laterally by a frame body FB which is arranged in the housing. A cover section CS is located opposite to the carrier CA and thereby covers the chambers C1, C2. The cover section CS has a main surface MS which essentially is parallel to a main surface of the carrier CA.

The cover section CS, frame body FB, and light barrier LB may be manufactured by a continuous piece of material, such as a mold material, for example. The carrier CA provides mechanical support and electrical connectivity to electronic components integrated into the optical sensor module. For example, the carrier CA comprises a printed circuit board (PCB). However, in other embodiments (not shown) the carrier CA can also be part of the housing, e.g. as a section in the continuous piece of material mentioned above, e.g. a mold material, and electronic components are embedded into the housing.

An optical emitter OE is located inside the first chamber C1. In this particular embodiment, the optical emitter OE is arranged on and electrically connected to the carrier CA, e.g. to the PCB. The optical emitter OE is a laser diode such as a VCSEL or VECSEL. These types of lasers are configured to emit light in the infrared part of the electromagnetic spectrum, for example.

A main detector MD and a reference detector RD are integrated into a single detector die, such as a single semiconductor integrated circuit manufactured in a CMOS process. The detectors are optically and spatially separated by the light barrier LB such that the main detector MD is located inside the second chamber C2 and the reference detector RD is located in inside the first cavity C1 together with the emitter OE. The detectors MD, RD can be implemented as single SPADs or SPAD arrays. They are used for a measurement of an optical reference signal and a measurement signal (see below), respectively.

First and second apertures A1, A2 are arranged into the cover section CS. The first and the second apertures A1, A2 are positioned above the optical emitter OE and the main detector MD, respectively. In fact, the apertures A1, A2 lie within an emission cone of the optical emitter OE and a field of view of the main detector MD, respectively. Therein, the emission cone includes all points in space that may, at least theoretically, be illuminated by the optical emitter OE, e.g. for a fixed emitter position and orientation within the optical sensor module. Similarly, the field of view of the main detector MD includes all points in space from where, at least theoretically, light after reflection at an external target TG may traverse towards the main detector MD, e.g. for a fixed detector position and orientation within the optical sensor module.

Optionally, first and second lenses (not shown) can be arranged in the first and the second apertures A1, A2, respectively. The lenses have optical lens shape such as spherical or cylindrical shape. The lenses may act as concave and/or convex lenses (or a combination thereof) and may focus emitted or reflected light on the target TG and/or the main detector MD. Furthermore, the main surface MS of the cover section CS can be covered with a transparent or translucent cover (not shown) to seal the optical module from its environment. The lenses can be an integral part of or be connected to the cover.

The optical sensor module is located behind an optically transparent or translucent cover plate CP, for example made of glass or a plastic material. The cover plate CP may not be part of the optical module but of a larger device, such as mobile device or camera, into which the optical sensor module is integrated. The cover plate CP, or cover for short, is positioned at a distance from the main surface MS of the cover section CS, which will be denoted air gap hereinafter.

In operation, the optical emitter OE emits light having an emission wavelength or emission spectrum in the IR or UV/vis. In many applications infrared emission is preferred as it is invisible to human sight. The emission of the optical emitter OE typically is modulated, e.g. emission is pulsed or modulated by a continuous wave, such as a sinusoid or square wave. The actual modulation frequency depends on whether the sensor is used for proximity or rangefinder application including autofocus, for example, and determines a range of the time-of-flight.

The optical emitter OE is located inside the housing such that at least a fraction of emitted light leaves the module via the first aperture A1. This fraction of light (denoted measurement fraction) eventually gets, at least partially, reflected by an external object or target TG. The main detector MD is located in the module such that reflected light may enter the second cavity C2 by way of the second aperture A2 and, consequently, be detected by the main detector MD. The main detector MD generates a measurement signal in response to the detected light. The optical path connecting the optical emitter OE with the main detector MD by way of the target TG establishes a measurement path P1 and the light traversing along the measurement path P1 forms a measurement beam of light.

However, another measurement path P2 (indicated by arrows in the drawing) may be established by the cover CP. For example, a fraction of emitted light can be reflected at the cover CP and be guided along the air gap to eventually reach the main detector MD. The main detector MD may then generate a measurement signal in response to the light reflected at the cover CP. Light traversing along the measurement path P2 forms another measurement beam of light.

Furthermore, a reference path P3 is established and optically connects the optical emitter OE with the reference detector RD without running via any external target. For example, the reference path P3 remains inside the first chamber C1 as both the emitter OE and the reference detector RD reside inside the same chamber. Implementations are possible, however, where both main and reference detector MD, RD are arranged in the same chamber or close to each other such that the reference path RP runs between the first and the second chamber, for example.

For time-of-flight measurements another fraction, denoted a reference fraction hereinafter, traverses along the reference path P3 and forms a reference beam of light. The light of the reference beam is at least partly detected by the reference detector RD which, in turn, generates a reference signal based on the detected light.

The measurement and reference signals are measures of the time-of-flight characteristic of the measurement path P1, and can be translated into distance (between the module and the target). However, the light reflected at the cover CP giving rise to the measurement path P2 contributes to the measurement signal. This crosstalk is subject to a dedicated signal processing as explained below.

Signal processing and time-of-flight calculation are performed on the same chip that comprises the main and reference detectors MD, RD as will be discussed in Figure 2. The necessary components are integrated together into an integrated circuit IC made from the same semiconductor die SD and comprise the main and reference detectors MD, RD.

Figure 2 shows an example implementation of a time-of-flight sensor according to the improved concept. The time-of-flight sensor arrangement is implemented as the optical sensor module discussed in Figure 1, for example. The integrated circuit IC comprises a driver DRV to drive the optical emitter OE. However, typically the emitter OE constitutes an external component which is electrically connected but may not be integrated into the semiconductor die. In this embodiment only the driver DRV is integrated into the integrated circuit IC and the emitter OE is a VCSEL laser diode which is arranged on the carrier CA of the module.

The integrated circuit IC further comprises the main detector MD and the reference detector RD. An output of the main detector MD is coupled to a measurement block MB. The integrated circuit IC further comprises a histogram block HIST that is coupled to the measurement block MB and to a processing circuit PRC. A control unit CTRL is connected to the processing circuit PRC and the measurement block MB. The control unit CTRL provides a control signal CS1 to the driver DRV to drive the emitter OE.

Figure 2 further shows an optional beam splitter BS (which may represent parts of the reference path RP), the first lens L1 and the second lens L2 as well as an optional filter F, which are components which are not integrated into the integrated circuit IC but comprised by the optical module. The drawing also indicates an external target TG, which lies outside the module.

For example, the driver DRV is configured to drive the emitter OE depending on the control signal CS1. In turn, the emitter OE emits a train of sensing pulses of electromagnetic radiation in response to respective trigger pulses of the control signal. Typically, the emitter OE emits one sending pulse for each trigger pulse in the control signal CS1. The electromagnetic radiation has wavelength from the visible, IR or UV part of the spectrum.

The sending pulses are guided through the first aperture A1 and traverse along the measurement path P1, P2, denoted as emitted pulses EP hereinafter. Reflected pulses are denoted reflected pulses RP, RP'. Eventually, the reflected pulses are detected by the measurement detector MD. Through reflections inside the first chamber C1 or by means of the beam splitter BS a portion of the sending pulse may be coupled out and directed to the reference detector RD as a starting pulse SP, indicating optically a time instant of the emission of the sending pulse respectively the emitted pulse EP. Upon detection of the starting pulse SP the reference detector RD provides a start signal to the measurement block MB for starting the measurement of the time period between emitting and receiving a pulse. Consequently, the detector MD provides a stopping signal to the measurement block MB upon detection of a received pulse. The measurement block MB determines a respective difference value representative of a time period between the sending pulse and the received pulse.

It should be apparent to the skilled reader that the usage of starting and stopping signals is only one of several options possible for determining said time period. For example, a start could also be triggered by the respective trigger pulse of the control signal CS1, for example.

The measurement block provides the previously determined difference values to the histogram block HIST for accumulating the values into a histogram. The processing circuit PRC is configured to generate the output signal OS being indicative of the time-of-flight based on an evaluation of the histogram. The control unit CTRL is configured to generate the control signal CS1 with a sequence of trigger pulses. This sequence of trigger pulses comprises a first trigger pulse and a plurality of subsequent trigger pulses. The control signal CS1 is generated such that for each of the subsequent trigger pulses a time period between a respective preceding trigger pulse is the same. However, said time period could also be different from a further time period between this trigger pulse and a respective succeeding trigger pulse in order to reduce aliasing effects.

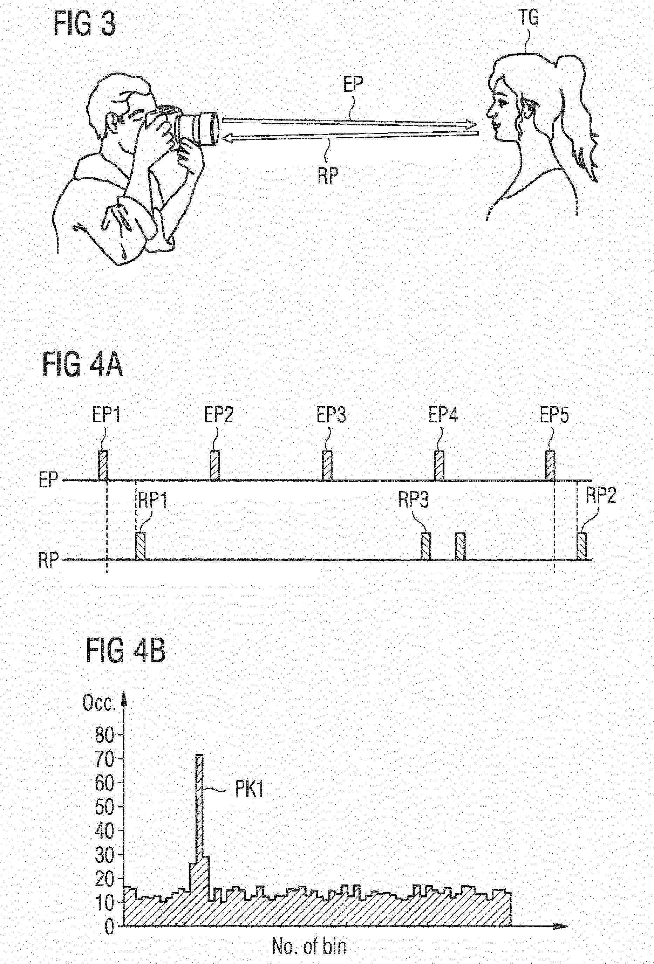

Figure 3 shows a schematic example of a measurement process of a single object. The measurement process allows for determining a time-of-flight value and a distance related thereto. In this example, the ToF sensor may be incorporated in a camera for measuring a distance between the camera and the external object TG, represented by a person in this example. Accordingly, a sending pulse of light is emitted as a pulse EP, reflected at the object TG and returned to the ToF sensor as a received pulse RP. A distance between the camera, comprising the time-of-flight sensor, and the object can be determined based on the time-of-flight of pulses EP, RP. This can be accomplished by evaluating a histogram as discussed in Figure 4B.

The drawing shows a signal time diagram with a series of five sending pulses EP1 to EP5, associated reflected pulses RP1 and RP2 reflected from the object TG, and additional reflected pulses RP3 originating from photons of noise or background light. Furthermore, it is apparent that not all intervals may receive a received pulse.

Only as an example, a pulse width of the pulses shown in Figure 4A is about 500 picoseconds or smaller, and a time-of-flight for a single emitted pulse and its reflected pulse RP has a constant value of 6 nanoseconds, corresponding to a distance between the sensor arrangement and the object TG of 0.9 meters, employing the speed of light c for the pulses. Referring back to Figure 1, this is achieved by respective trigger pulses in the control signal CS1.

Figure 4B shows a schematic histogram of a measurement process of a single object. As described in Figure 2 difference values are determined in the measurement block MB and are accumulated into bins of a histogram in the histogram block HIST. Accordingly, in the present example, the five received pulses having a time value of 6 nanoseconds are sorted or accumulated into a single bin of the histogram. The bins are denoted with numbers from 1 to N and typically have a same bin size. Each same difference value is sorted into the same bin. A number of difference values in a given bin is denoted an occurrence OCC, or number of events.

In this example, the pulse width of the 500 picoseconds represents a distance of 75 mm or 3 inches. The histogram has 64 bins representing a maximum distance of about 4.8 m. the object is located at 0.9 m. The background noise such as ambient light or noise would appear as a constant background level. One of the benefits of such a system is the ability to detect multiple objects as long as the objects are separated by some distance which can be resolved by the utilized pulse width and bin size. Any additional reflected pulses and their respective difference values are sorted in separate bins.

The processing circuit PRC can now evaluate the histogram. A peak is determined by a higher count in the respective bin, e.g. higher than a mean level or background level. The processing circuit may output a value of the bin corresponding to the 6 nanoseconds as an output signal. It is apparent that this value may be in a form of a time value, a calculated distance value or any other value that can be derived from the time value associated with the histogram bin.

In the example, only five sending pulses, respectively triggered by respective trigger pulses of a control signal CS1, are used. However, a higher or lower number of trigger pulses, respectively sending pulses, could also be used. Typically in a time-of-flight system, the pulses are repeated many times, possibly up to several million pulses. The pulses can be accumulated in one or more histograms. For example, the histogram records the background photons and reflected photons from a target object. Additionally, also the timing between trigger pulses, respectively sending pulses, could be adapted, e.g. taking into account a desired maximum distance of distance measurements. Accordingly, all numbers and values in the diagram of Figure 4B are only to be taken as nonlimiting examples.

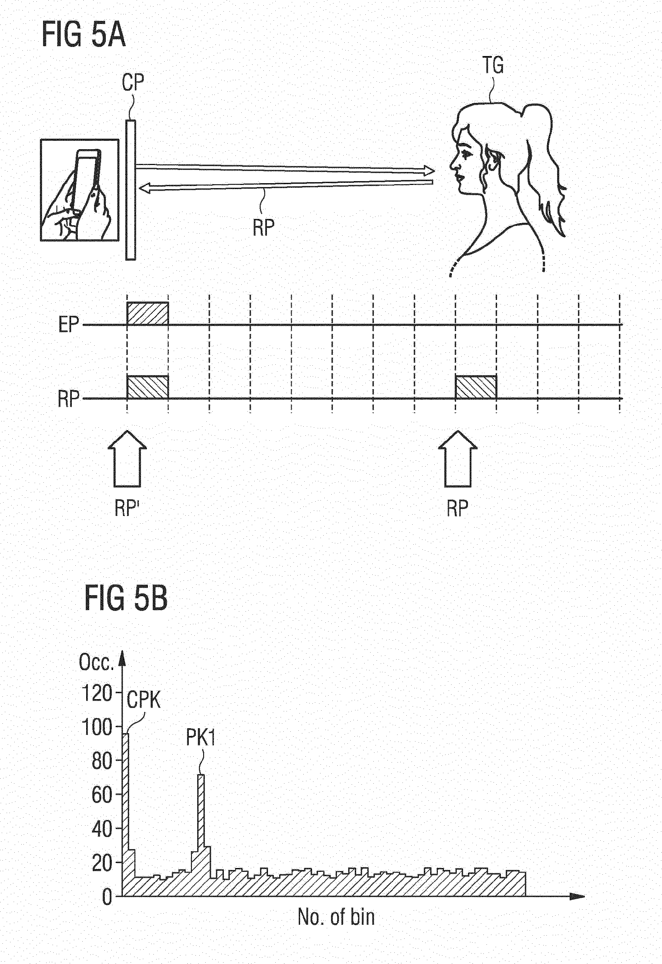

Figure 5A shows a schematic example of a measurement process of an object and a cover. In many systems, the time-of-flight sensor must be in close behind a cover plate such as a glass cover for mobile device or camera. In this case, the cover can be a source of crosstalk between the optical emitter and the detector. If this contamination on the cover such as smudges or dirt this could further add to the crosstalk.

The drawing shows sending pulses EP which are emitted towards the external object TG traverse along the measurement path P1. Furthermore, sending pulses EP are emitted towards the cover plate CP and traverse along the measurement path P2. Reflected pulses are denoted reflected pulses RP, RP' and are reflected at the target TG and the cover plate CP, respectively. In addition, the drawing shows bins of the histogram (indicated as dashed lines and numbered from 1 to 12). A received pulse RP', i.e. a respective difference value, is sorted into bin 1 and corresponds to a reflection at the cover plate CP. Another received pulse RP is sorted into bin 9 and corresponds to a reflection at the object TG.

Figure 5B shows a schematic histogram of a measurement process of an object and a cover. The received pulse RP' gives rise to a range of difference values which are due to reflection at the cover plate CP. This range is denoted crosstalk response. This is apparent as a peak in the bin 1 of the histogram. This peak is denoted crosstalk peak hereinafter. As an example, the received pulse RP gives rise to a difference value which is due to reflection at the target object TG. This peak is denoted peak PK1 hereinafter. In order to calibrate the time-of-flight system a crosstalk response has to be identified and separated from a peak PK1 which represents a distance from an actual object.

One benefit of the representation of difference values in the histogram is that it facilitates the identification of peaks. For example, by using a narrow pulse width and small bin sizes it is possible to place the crosstalk response into the first or two bins of the histogram. In general, the design of the time-of-flight system and, in particular, distance of the cover plate CP with respect to the time-of-flight sensor determines a predetermined range of bins 1, ..., M in which reflections at the cover plate (and respective difference values) are to be expected. The height, or occurrence, of the crosstalk response can be derived from the crosstalk peak and changes thereof with time can be used as a measure of the crosstalk or contamination on the cover plate. Crosstalk and contamination can be considered in various ways as will be discussed in the following. The method generally depends on the implementation and the need to measure zero distances or not. A peak originating from an actual object at zero distance may overlap with the crosstalk response and, thus, may not be distinguishable from each other without additional method steps.

First, crosstalk can be removed from the histogram by ignoring the bin or range of bins which represent the crosstalk response. For example, when the time-of-flight system is embedded in a digital camera it can be used to assist the autofocus. A typical optical lens has a shortest focal length which basically defines a minimum distance of the system. All information or difference values accumulated into bins representing smaller distances can be neglected as they represent distances smaller than the minimum distance. In other words, a camera autofocus system has minimum focal distance and does not need to know the distance to zero. Having a minimal distance of 150 mm would allow to neglect the first two bins of the histogram, for example.

Second, the steady-state amount or occurrence defined by the crosstalk response can also be subtracted from the bins within the predetermined range of bins. For example, the crosstalk response can be subtracted from the first two bins of the histogram. For example, a baseline can be established and subtracted from the histogram.

In some implementations of the time-of-flight system the time-of-flight sensor is being used as a proximity sensor. For a proximity sensor it may be important to detect distance down to zero, such that the bins of the predetermined range of bins record difference values that may be considered in an evaluation of the histogram.

One possible method involves detection of the crosstalk response in a pre-calibration, either at manufacturing or at startup of the time-of-flight system, and subtract the pre-calibrated crosstalk response from the histogram, e.g. by means of a baseline. This additional calibration and subtraction can be executed using the processing circuit PRC, such as a CPU or microcontroller. The ability to do such a pre-calibration can be used to determine a calibration value for the bins of the predetermined range of bins, e.g. the first two bins, when the device is initially started. This calibration value would represent a minimum value that would be expected as crosstalk.

Another implementation that can be used for proximity applications would provide for dynamic calibration when an object moves towards the time-of-flight sensor. For example, a peak PK1 can be monitored by recording several histograms of a series of histograms. The peak can move and the movement can be detected in the series of histograms. Eventually the peak moves into the predetermined range of bins and into a bin corresponding to zero distance. In such a case the peak PK1 and the crosstalk response may be indistinguishable. The calibration value recorded in the pre-calibration can be used to determine a number of difference values due to reflection at the cover and a number of difference values due to the target object in the predetermined range of bins. From a comparison of these values with the measured peak, it can be determined whether contamination at the cover plate is present or even whether it has increased or decreased.

Furthermore, when the object (and the monitored peak PK1) moves away from the sensor (or bin in the histogram) the remaining crosstalk response can be used to recalibrate a new calibration value. This way can be verified if the crosstalk response remains the same or has increased or decreased in height (or occurrence). The change in calibration value provides an indication of contamination of the cover plate. Furthermore, the values accumulated in the respective bins can be adjusted with the calibration value for example increased or decreased.

Another implementation would be to report when two or more objects, and respective peaks are identified in the histogram, i.e. the crosstalk response and the monitored peak PK1, to an operating system of the device into which the time-of-flight system is embedded into. The system is arranged to determine which of the peak corresponds to crosstalk and to an actual object. Thus, at least parts of the proposed method can be executed or complemented by the operating system of the device.

For example, in a mobile phone system, the time-of-flight sensor could be used as both a proximity detector and the distance measurement system for camera autofocus. If the time-of-flight sensor where operating as a camera autofocus, it could disregard corresponding to distances smaller than the minimum focal distance. If, however, the time-of-flight system reported multiple objects, the system could ignore the close object and only focus on the peak corresponding to an object within the focal range. On the other hand, if the time-of-flight sensor where being used as a proximity sensor, the multiple objects could be recorded along with their intensity in the histogram (e.g. occurrence of difference values). Since the system has more knowledge of the operating condition, it could have more information to make a decision regarding the intensity decreases or increases and if the object is real or temporary object such as contamination on the cover plate.

Another implementation the processing circuit PRC reports a change in the crosstalk response (e.g. indicated by a different calibration value) as an indication of contamination of the sensor. If the sensor is embedded in a camera system and located close to the camera, contamination on the sensor could also indicate contamination of the camera. Reporting of contamination, e.g. by a dedicated output signal, could be used to inform the user of potential contamination and intake that the user may need to clean the lens over the camera subsystem.

Reference numerals

| | |
|---|---|
| A1 | aperture |
| A2 | aperture |
| BS | beam splitter |
| C1 | chamber |
| C2 | chamber |
| CA | carrier |
| CS | cover section |
| CS1 | control signal |
| CTRL | control unit |
| CTP | crosstalk peak |
| DRV | driver |
| EP | emitted pulse |

| | |
|---|---|
| EP1 | emitted pulse |
| EP2 | emitted pulse |
| EP3 | emitted pulse |
| EP4 | emitted pulse |
| EP5 | emitted pulse |
| FB | frame body |
| HIST | histogram block |
| IC | integrated circuit |
| L1 | lens |
| L2 | lens |
| LB | light barrier |
| MB | measurement block |
| MD | main detector |
| MS | main surface |
| OCC | occurrence |
| OE | optical emitter |
| OS | output signal |
| P1 | measurement path |
| P2 | measurement path |
| P3 | measurement path |
| PK1 | peak |
| PRC | processing circuit |
| RD | reference detector |
| RP | reflected pulse |
| RP' | reflected pulse |
| RP'' | reflected pulse |
| SP | starting pulse |
| TG | target |

**Claims**

1. A method for calibrating a time-of-flight system having a time-of-flight sensor located behind a cover plate (CP),

   - emitting a plurality of sending pulses (EP) of light in response to respective trigger pulses of a control signal (CS1),
   - detecting received pulses of light (RP, RP'),
   - determining respective difference values representative of a time period between one of the sending pulses (EP) and one of the received pulses (RP, RP'),
   - accumulating the difference values into a number of bins (1, ..., N) of at least one histogram,
   - recording at least one crosstalk response (CTP) in the histogram within a predetermined range of bins (1, ..., M),
   - calibrating the histogram using the recorded crosstalk response (CTP), and
   - generating an output signal (OS) being indicative of a time-of-flight based on an evaluation of the calibrated histogram, wherein the output signal (OS) is indicative of a time-of-flight of a peak (PK1) or peaks in the histogram at a bin or range of bins other than the predetermined range of bins (1, ..., M).

2. The method according to claim 1, wherein

   - the histogram is calibrated by disregarding the crosstalk response (CTP), and
   - the output signal (OS) is indicative of a time-of-flight of a peak or peaks (PK1) in the histogram at a bin or range or bins other than the predetermined range of bins (1, ..., M) .

3. The method according to claim 2, wherein the histogram is calibrated by evaluating the histogram only for higher bins than the predetermined range of bins (1, ..., M).

4. The method according to claim 1, wherein the histogram is calibrated by subtracting the crosstalk response (CTP) multiplied by a scaling factor from the histogram.

5. The method according to one of claims 1 to 4, wherein

   - emitting a plurality of sending pulses (EP), detecting received pulses (RP) and determining respective difference values is repeated such that a series of histograms are accumulated with difference values and/or respective crosstalk responses are averaged and recorded as crosstalk response.

6. The method according to claim 5, comprising the further steps of:

   - determining one or more further peaks (PK1) in the series of histograms,
   - monitoring at least the further peaks (PK1) throughout the series of histograms, and
   - one or more of the histograms of the series of histograms is calibrated if one or more of the monitored peak (PK1) move into the predetermined range of bins (1, ..., M) .

7. The method according to one of claims 1 to 6, wherein

   - a calibration value is determined in a pre-calibration mode at start-up of the time-of-flight system in a defined calibration condition, in particular, with no objects present other than the cover plate (CP), and/or
   - the calibration value is dynamically adjusted by monitoring the crosstalk response (CTP) and/or the further peaks (PK1).

8. The method according to claim 6, wherein

   - the calibration value is determined from the monitored peak (PK1) that has moved into the predetermined range of bins,
   - the calibration value is determined from a comparison of the crosstalk response (CTP) and the monitored peak (PK1) that has moved into the predetermined range of bins, and/or
   - the calibration value is determined from a combined crosstalk response comprising both the crosstalk response (CTP) and the monitored peak (PK1) that has moved into the predetermined range of bins.

9. The method according to claim 8, wherein the calibration value determined from the combined crosstalk response using a time averaging filter having:

   - with a slow attack, that is a slow time averaging as a signal amplitude of the combined crosstalk response increases, and/or
   - with a fast decay, that is a fast averaging as the signal amplitude of the combined crosstalk response decreases.

10. The method according to one of claims 1 to 9, wherein the control signal (CS1) is generated with a sequence of trigger pulses, wherein a time period between subsequent trigger pulses is determined by a desired maximum detection range of the time-of-flight sensor.

11. The method according to one of claims 1 to 10, wherein a pulse width of the sending pulses (EP) is equal or smaller than a difference value representative of a minimum detection range of the time-of-flight sensor.

12. The method according to claim 11, wherein a range of the histogram is determined by the desired maximum detection range and a bin size is arranged to be equal or smaller than the pulse width of the sending pulses (EP).

13. The method according to claim 12, wherein the pulse width of the sending pulses (EP), the time period between subsequent trigger pulses and/or a number of sending pulses (EP) is adjustable.

14. A Time-of-flight system comprising a time-of-flight sensor located behind a cover plate (CP), wherein the time-of-flight sensor comprises:

   - an optical emitter (OE) configured to emit a plurality of sending pulses (EP) of light in response to respective trigger pulses of a control signal (CS1),
   - a detector (MD) configured to detect received pulses (RP) of light,

- a measurement block (MB) configured to determine respective difference values representative of a time period between one of the sending pulses (EP) and one of the received pulses (RP),
- a histogram block (HIST) configured to accumulate the difference values into a number of bins (1, ..., N) of a histogram,
- a processing circuit (PRC) configured to generate an output signal (OS) being indicative of a time-of-flight based on an evaluation of the histogram, configured to record at least one crosstalk response in the histogram within a predetermined range of bins (1,..., M), and configured to calibrate the histogram using the recorded crosstalk response, and configured to generate an output signal (OS) being indicative of a time-of-flight based on an evaluation of the calibrated histogram, wherein the output signal (OS) is indicative of a time-of-flight of a peak (PK1) or peaks in the histogram at a bin or range of bins other than the pre-determined range of bins (1,..., M), and
- a control unit (CTRL) configured to generate the control signal (CS1) with a sequence of trigger pulses.

15. The time-of-flight system of claim 14, wherein

- the time-of-flight system is embedded in a mobile device and/or an autofocus system of a digital camera, and
- the time-of-flight sensor is a proximity sensor and/or a rangefinder.

16. The time-of-flight system of claim 15, wherein

- the time-of-flight sensor comprises a driver (DRV) to drive the emitter (EM) depending on the sequence of trigger pulses, and wherein
- the driver (DRV) is arranged to drive the emitter such that a pulse width of the sending pulses is narrow,
- the narrow pulse width of the sending pulses is equal or smaller than a difference value representative of a time period between one of the sending pulses (EP) and one of the received pulses (RP, RP') reflected at the cover plate (CP).

# FIG 1

# FIG 2

## FIG 3

## FIG 4A

## FIG 4B

# FIG 5A

# FIG 5B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2469296 A1
- WO 2017115247 A1

- AT 513402 B1